# EUROPÄISCHE PATENTSCHRIFT

(11) **EP 2 885 606 B1**
(45) Veröffentlichungstag und Bekanntmachung des Hinweises auf die Patenterteilung: **20.07.2016**
(21) Anmeldenummer: 14725990.7
(22) Anmeldetag: 21.05.2014
(51) Int. Cl.: G01B 21/04

(54) **MESSVORRICHTUNG FÜR EINE WERKZEUGMASCHINE**
MEASURING DEVICE FOR A MACHINE TOOL
DISPOSITIF DE MESURE DESTINÉ À UNE MACHINE-OUTIL

(30) Priorität: 10.07.2013 DE 102013011440
(43) Veröffentlichungstag der Anmeldung: 24.06.2015
(73) Patentinhaber: M&H Inprocess Messtechnik GmbH, 88289 Waldburg (DE)
(72) Erfinder: WIEST, Christoph, 88250 Weingarten (DE)
(74) Vertreter: Otten, Roth, Dobler & Partner mbB Patentanwälte
(86) Internationale Anmeldenummer: PCT/EP2014/060384
(87) Internationale Veröffentlichungsnummer: WO 2015/003843

(56) Entgegenhaltungen:
- DE-A1-102007 053 330
- US-A1- 2009 049 704
- US-A1- 2011 002 361

## Beschreibung

Die Erfindung betrifft eine Messvorrichtung für eine Werkzeugmaschine nach dem Oberbegriff des Anspruchs 1.

### Stand der Technik

Es sind Werkzeugmaschinen bekannt, mit denen sich mehrere, z.B. zwei, insbesondere gleiche Werkstücke gleichzeitig bearbeiten lassen. Dabei können für vorgegebene Bewegungsrichtungen von mehreren Werkzeugen an verschiedenen Bearbeitungsplätzen Vorschubantriebe ausgebildet sein, mit denen sich die Werkzeuge oder auch die Werkzeughalter an mehreren Bearbeitungsplätzen einer Werkzeugmaschine auf gleichartigen Bewegungsbahnen insbesondere synchron bewegen lassen. Um beispielsweise eine Maßgenauigkeit einer Bearbeitung von Werkstücken und auch von Werkzeugen in solchen Werkzeugmaschinen zu prüfen, sind Messvorrichtung mit mehreren Messtastern bekannt, die z.B. in Werkzeugaufnahmen der Werkzeugmaschine einsetzbar sind.

Eine entsprechende Messvorrichtung für eine Werkzeugmaschine mit mindestens zwei Messtastern, die zur Datenübertragung an eine Erfassungseinrichtung ausgebildet sind, ist aus der deutschen Patentanmeldung DE 10 2012 022 116.9 bekannt. Dabei sind die Messtaster und die Erfassungsvorrichtung für eine synchrone Kommunikation ausgebildet, bei der jedem der Messtaster Zeitabschnitte zugeordnet sind, in denen ausschließlich eine Übertragung von Daten des jeweiligen Messtasters an die Erfassungseinrichtung stattfinden kann. Die Daten sind vorzugsweise Messdaten und können auch weitere Betriebsdaten sein, mit denen ein Messtaster z.B. eine Störung oder z.B. einen Betriebszustand einer Komponente, wie z.B. einer Batterie oder eines Sensors, an die Erfassungseinrichtung übermitteln kann. Die Erfassungseinrichtung ist in entsprechender Weise dazu ausgebildet, die Daten gemäß dem Zeitabschnitt, in dem sie empfangen werden, dem jeweiligen Messtaster zuzuordnen und die Daten mit Bezug z.B. zu einem von mehreren Bearbeitungsplätzen an z.B. eine Werkzeugmaschine, insbesondere einen die Werkzeugmaschine kontrollierenden Rechner weiterzuleiten.

Durch die Zuteilung von Zeitabschnitten für eine exklusive Sendeberechtigung an jeweils einen Messtaster sind gegenseitige Störungen der Messtaster beim Übertragen von Daten unterbunden.

Daneben offenbart DE 10 2007 053 330 A1 eine Messvorrichtung nach dem Oberbegriff des Anspruchs 1.

Ein Nachteil der bekannten Messvorrichtungen besteht allerdings darin, dass ein synchroner Betrieb von mindestens drei Geräten, der Erfassungseinrichtung und den mindestens zwei Messtastern, während eines Messbetriebs über mehrere Messpunkte aufrechterhalten bleiben muss, um z.B. eine fehlerhafte Zuordnung von Messsignalen bzw. -daten zu einem Messtaster zu vermeiden. Ein weiterer Nachteil besteht darin, dass die Synchronisation der Kommunikationsteilnehmer nach einer bestimmten Zeitspanne immer wieder erneuert werden muss.

Die Aufgabe der vorliegenden Erfindung besteht darin, eine alternative Messvorrichtung bereitzustellen, mit der sich die oben genannten Nachteile vermeiden lassen.

Die Aufgabe wird erfindungsgemäß durch eine Messvorrichtung mit den Merkmalen des Anspruchs 1 gelöst.

Bevorzugte und vorteilhafte Ausführungen der Erfindung sind in den Unteransprüchen angegeben.

Die Erfindung geht von einer Messvorrichtung für eine Werkzeugmaschine aus, wobei die Messvorrichtung eine Erfassungseinrichtung und mindestens zwei Messtaster umfasst, und wobei die Erfassungseinrichtung und die Messtaster für eine kabellose, digitale Übertragung von Meldungen von jedem der Messtaster an die Erfassungseinrichtung ausgebildet sind.

Der Kern der Erfindung besteht darin, dass jeder der Messtaster eine Kontrolleinheit umfasst, die zur Steuerung zeitlicher Abläufe zur Übertragung von Meldungen ausgebildet ist, dass des Weiteren in jedem der Messtaster für mindestens eine Meldung ein Übertragungsvorgang mit einer Sendefolge festgelegt ist, die mehrere Sendevorgänge für ein mehrmaliges Senden der Meldung umfasst, wobei zwischen jeweils zwei der Sendevorgänge einer Sendefolge eine Wartezeit vorgegeben ist, in der der jeweilige Messtaster nicht sendet und die größer ist als eine Sendedauer eines Sendevorgangs eines der Messtaster bei einer Übertragung einer Meldung, und dass die Wartezeit in jedem Messtaster von den Wartezeiten der verbleibenden Messtaster verschieden ist.

Durch das mehrmalige Senden der Meldung gemäß einer Sendefolge eines Messtasters kann sichergestellt werden, dass die Erfassungseinrichtung das Datenwort zumindest einmal ungestört empfangen kann. Durch die Wartezeiten zwischen zwei aufeinanderfolgenden Sendevorgängen der Sendefolge desselben Übertragungsvorgangs, die größer ist als die Sendedauer, insbesondere als eine maximale Sendedauer der Sendevorgänge eines der verbleibenden Messtaster - insbesondere aller verbleibenden Messtaster - , besteht zudem grundsätzlich die Möglichkeit, dass die Erfassungseinrichtung mehrere Sendevorgänge von mehreren verschiedenen Messtastern nacheinander ungestört empfangen kann.

Die Meldungen der Messtaster sind insbesondere zur Übermittlung von Betriebsereignissen wie z.B. einem Messereignis und gegebenenfalls von Betriebszuständen wie z.B. einer Bereitschaft zur Erfassung eines Messpunktes vorgesehen. Vorzugsweise ist die Meldungen im jeweiligen Messtaster in Form eines vorgegebenen Meldungscodes bereitgestellt, insbesondere abgespeichert. Der Meldungscode ist vorzugsweise eine z.B. Zahl und ist insbesondere binär codiert. Ein oder mehrere, insbesondere alle, Meldungscodes können Bitmuster sein, die beispielsweise nach übertragungstechnischen Gesichtspunkten ausgewählt sind. Dabei können für die Meldungscodes vergleichsweise störfeste Bitmuster ausgewählt sein.

Des weitere ist es bevorzugt, dass der Meldung im jeweiligen Messtaster mehrere verschiedene Meldungscodes zugeordnet sind, die zur Übertragung der Meldung vorgesehen und insbesondere bereitgestellt sind. Dadurch sind verschiedene Sendevorgänge einer Sendefolge durch die Erfassungseinrichtung vorteilhaft unterscheidbar.

Dabei ist jeder der in einem Messtaster abgespeicherten Meldungscodes eindeutig einer Meldung zugewiesen, um vorteilhaft eine schnelle und zuverlässige Erkennung der Meldung zu ermöglichen. Aus dem gleichen Grund ist es bevorzugt, dass jeder in einem Messtaster bereitgestellte Meldungscode eindeutig nur eine der Messtaster zugewiesen ist.

Für eine zuverlässige Übertragung von Meldungen ist es außerdem bevorzugt, dass alle in den Messtastern bereitgestellten Meldungscodes derart aufeinander abgestimmt sind, dass eine zeitliche Überlappung von mehreren Sendevorgängen erkennbar ist.

Für eine genaue Zuordnung von Messereignissen an eines von mehreren Messobjekten umfasst die Erfassungseinrichtung vorzugsweise eine Auswertungseinheit, die zur Zuordnung eines empfangenen Meldungscodes zu einer Meldung und einem Messtaster ausgebildet ist.

Die Anzahl der Messtaster, die zur Übertragung von Meldungen an die Erfassungseinrichtung vorgesehen sind, kann an der Erfassungseinrichtung bzw. an den Messtastern einstellbar sein. Dadurch lässt sich die Messvorrichtung vorteilhaft an unterschiedliche Einsatzbedingungen beim Messen anpassen.

Des Weiteren ist es bevorzugt, dass sich die Sendefolge jedes der Messtaster von jeder Sendefolge der übrigen Messtaster unterscheidet. Insbesondere wenn die Messtaster dazu vorgesehen sind gleiche Messpunkte an gleichartigen Werkstücken oder gleichartigen Werkzeugen anzufahren, kann mit insbesondere zeitlich unterschiedlichen Sendefolgen sichergestellt werden, dass von jedem Messtaster mindest einmal ein Datenwort von der Erfassungseinrichtung korrekt empfangen wird. Beispielsweise können verschiedene der Messtaster einen ersten Sendevorgang mit unterschiedlichen Zeitversätzen zu einem Messereignis an den Messtastern beginnen.

Die Wartezeit der Sendefolge ist vorzugsweise auf die Anzahl der Messtaster abgestimmt, um ein mehrmaliges Überlappen von Sendevorgängen der Sendefolge des Messtasters bei einer Übertragung der Meldung zu vermeiden.

Eine bevorzugte Ausführung der Erfindung besteht darin, dass ein oder mehrere der Wartezeiten jedes der Messtaster von den Wartezeiten der übrigen Messtaster verschieden ist.

Eine weitere bevorzugte Ausführung der Erfindung besteht darin, dass die Sendefolge der Meldung eines der Messtaster mehrere verschiedene Wartenzeiten aufweist, wenn die Sendefolge mehr als zwei Sendevorgänge umfasst. Dabei können mehrere in der Sendefolge aufeinanderfolgende Wartezeiten eine zunehmende Dauer aufweisen. Die Anzahl der Sendevorgänge der Sendefolge mindestens eines der Messtaster und vorzugsweise aller Messtaster kann auf die Anzahl der Messtaster abgestimmt sein, um vorteilhaft die Zuverlässigkeit der Übertragung von Meldungen zu erhöhen..

Vorzugweise weist zumindest einer der Messtaster Einstellmittel auf, die zum Einstellen wenigster eines veränderbaren Parameters der Sendefolge des Messtasters ausgebildet sind.

Des Weiteren ist es bevorzugt, dass in mindestens einem der Messtaster eine Nachprellzeit vorgegeben ist, in der ein Beginn eines nachfolgenden weiteren Übertragungsvorgangs einer Meldung blockiert ist. Damit lässt sich beispielsweise vermeiden, dass ein Messtaster, der bereits an einem weiteren Messpunkt angelangt ist, mit einem Sendevorgang die übrigen Messtaster stören kann.

Zudem ist es bevorzugt, dass in jedem der Messtaster eine maximale Sendedauer für Sendevorgänge vorgegeben ist. Beispielsweise kann allen Messtastern jeweils ein Satz von binär codierten Datenworten als Meldungscodes zugewiesen sein, wobei die Datenworte eine einheitliche, d.h. gleiche Anzahl von Binärzeichen (Bits) aufweisen. Vorzugsweise weisen die Messtaster eine einheitliche Übertragungsrate auf, wodurch sich in Verbindung mit einer einheitlichen Länge der Meldungscodes eine einheitliche Sendedauer bei Sendevorgängen ergibt. Dies ermöglicht eine vorteilhaft einfachere Kontrolle von Übertragungsvorgängen.

Eine bevorzugte Ausführung der Erfindung besteht darin, dass die Erfassungseinrichtung ein Signalempfangseinheit aufweist, die zum Messen mindestens eine Signalparameters einer empfangenen Signalfolge ausgebildet ist, um sich zeitlich überlappende Sendevorgänge von mehreren Messtaster zu erkennen.

Vorzugsweise ist die Messvorrichtung für eine kabellose Signalübertragung mit Infrarotlicht ausgebildet.

Zudem ist es bevorzugt, dass die Messtaster und die Erfassungseinrichtung für eine asynchrone Signalübertragung ausgebildet sind.

Anhand eines Ausführungsbeispiels wird nachfolgend die Erfindung mit Hilfe von Zeichnungen näher erläutert, wobei weitere Vorteile der Erfindung angegeben werden. Dabei ist die Ausführungen der Erfindung in den Figuren nicht maßstäblich dargestellt. Es zeigen:
- Figur 1: eine schematische, perspektivische Ansicht einer erfindungsgemäßen Messvorrichtung,
- Figur 2: eine Tabelle mit Signalworten der Messtaster,
- Figur 3: ein Diagramm eines schematischen Ablaufs einer Messung mit einem Messtaster einer erfindungsgemäßen Messvorrichtung,
- Figur 4: ein Diagramm eines schematischen Ablaufs der Übertragungsvorgänge zweier Messtaster einer erfindungsgemäßen Messvorrichtung.

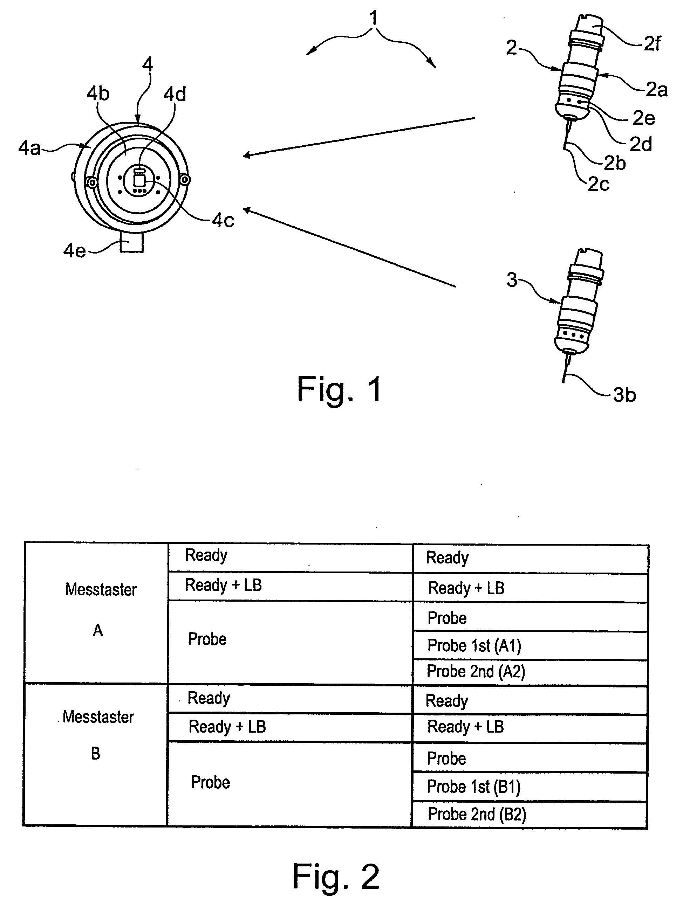

In Figur 1 ist ein Ausführungsbeispiel einer erfindungsgemäßen Messvorrichtung 1 gezeigt, die zwei Messtaster 2 und 3 sowie eine Erfassungseinrichtung 4 umfasst. Die Messtaster 2 und 3 können für eine diskret schaltende Messung wie auch für eine Messwert aufzeichnende Messung ausgebildet sein, insbesondere wenn im letztgenannten Fall der Messtaster 2, 3 ebenfalls für ein Aussenden einer Schaltmeldung ausgebildet ist. Mechanisch sind die beiden Messtaster 2 und 3 vorzugsweise gleich aufgebaut, so dass am Beispiel des Messtasters 2 weitere Einzelheiten beschrieben werden können.

Der Messtaster 2 weist ein Gehäuse 2a auf, an dem ein Taststift 2b beweglich gelagert ist. Für eine Erfassung von Auslenkungen können im Bereich der Lagerung des Taststifts 2c ein oder mehrere Sensoren (nicht gezeigt) im Gehäuse 2a angeordnet sein, mit denen bei einer Auslenkung des Taststifts 2b ein Schaltsignal und gegebenenfalls einen Messwert erzeugbar sind.

Am Messtaster 2 ist ein Aufnahmekonus 2f zur Anbringung des Messtasters 2 beispielsweise in einer Werkzeugaufnahme (nicht gezeigt) einer Werkzeugmaschine (nicht gezeigt) vorgesehen. Ein Beispiel einer entsprechenden Werkzeugmaschine lässt sich der Schrift DE 10 2012 022 116 A1 entnehmen.

Am freistehenden Ende des Taststifts 2b ist ein Tastkörper 2c ausgebildet. Der Tastkörper 2c ist vorzugsweise als z.B. Kugel oder z.B. Kegelspitze (nicht gezeigt) geformt, durch deren Geometrie vorteilhaft ein Bezugspunkt für Messungen mit einer vorbestimmten Umgebung, z.B. ein Zentrum der Kugelform oder eine z.B. Spitze der Kegelform, vorgegeben ist.

Für eine Messung wird der Messtaster 2, 3 bezüglich eines Messobjekts (nicht gezeigt) bewegt, bis ein Messpunkt (nicht gezeigt) an der Oberfläche des Messobjekts vom Tastkörper 2c berührt wird. Durch die Berührung des Tastkörpers 2c wird der Taststift 2b ausgelöst. Die Auslenkung des Taststifts 2b lässt sich im Messtaster als Messereignis vorzugsweise elektronisch erfassen und als Meldung an die Erfassungseinrichtung 4 übermitteln. Dafür sind am Gehäuse Sendeelemente 2e angeordnet, die von einem Fensterbereich 2d, der vorzugsweise transparent abgedeckt ist, Lichtsignale mit z.B. Infrarotlicht (IR-Licht) aussenden können. Die Sendeelemente 2e können z.B. Leuchtdioden für IR-Licht sein.

Die Erfassungseinrichtung 4 weist ein Gehäuse 4a mit einem Fenster 4b auf. Im Fenster 4b ist ein optisches Empfangselement 4c zum Empfang von Signalen der Messtaster 2 und 3 angeordnet. Gegebenenfalls können in der Fensteröffnung 4b auch Sendeelemente 4d angeordnet sein, mit denen auch die Erfassungseinrichtung 4 z.B. zeitweise Meldungen versenden kann. Eine Anschlussleitung 4e ist für eine Verbindung der Erfassungseinrichtung 4 mit einem Verbindungspartner (nicht gezeigt), z.B. einer Werkzeugmaschine oder z.B. einem Steuerungsrechner, vorgesehen, um Signale für Schaltvorgänge und zur Datenübertragung mit dem Verbindungspartner auszutauschen. Zum Beispiel kann die Erfassungseinrichtung 4 und die Anschlussleitung 4e für einen bekannten industriellen Feldbus, wie z.B. PROFIBUS oder auch z.B. SERCOS, ausgebildet sein.

Die Figur 2 zeigt eine dreispaltige Tabelle, in der alle Meldungscodes aufgelistet sind, die zur Übermittlung von Betriebsereignissen an die Erfassungseinrichtung 4 die Messtaster 2 und 3 vorgegeben sind. Die Tabelle ist gemäß der ersten Spalte vertikal in zwei Abschnitte aufgeteilt. von denen der obere einem Messtaster A und der untere Abschnitt einem Messtaster B zugeordnet ist. Für nachfolgende Erläuterungen sollen der Messtaster A mit dem Messtaster 2 und der Messtaster B mit dem Messtaster 3 übereinstimmen.

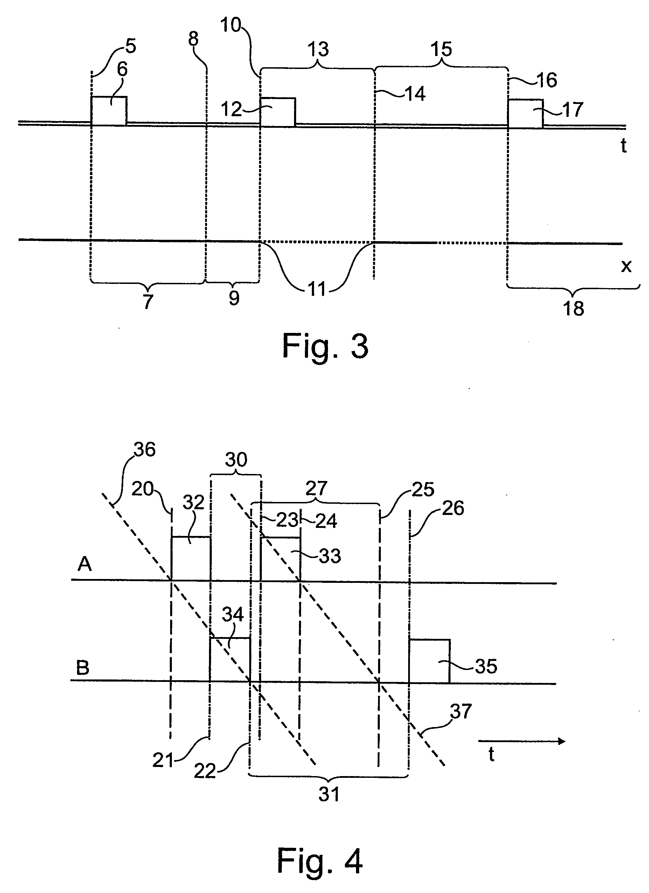

In der mittleren Spalte sind Meldungen aufgeführt, die später nachfolgend anhand der Figur 3 beschrieben werden. Dabei umfasst jeder Messtaster die gleichen drei verschiedenen Meldungen, die sich aus den Bezeichnungen ergeben: "Ready", "Ready + LB" und "Probe", wobei "LB" für "low battery" steht und zur Anzeige eines Bedarfs für eine Aufladung oder einen Wechsel eines Energiespeichers vorgesehen ist. In der rechten Spalte sind zu jeder Meldung Meldungscodes angegeben, die in der Tabelle mit ihren symbolischen Bezeichnungen eingetragen sind. In den Messtastern sind die Meldungscodes vorzugsweise als Bitfolgen aus z.B. den Werten 0 und 1 bereitgestellt, die insbesondere in Datenworten mit einer einheitlich vorgegebenen Stellenzahl (z.B. Bitlänge) abgespeichert sind. Gemäß der vertikalen Aufteilung der Tabelle der Fig. 3 sind die Meldungscodes der oberen Tabellenhälfte "Messtaster A" im Messtaster 2 und die Meldungscodes der unteren Tabellehälfte "Messtaster B" im Messtaster 3 hinterlegt.

Alle Meldungscodes der Tabelle sind zudem in der Erfassungseinrichtung 4 für eine Erkennung und Zuordnung empfangener Meldungscodes hinterlegt. Dadurch ist mit Hilfe der Erfassungseinrichtung 4 beispielsweise erkennbar, an welchem der Messtaster 2 und 3 eine Erneuerung der Energiequelle (nicht gezeigt) nötig ist.

Die Tabelle in Fig. 3 kann alle Meldungscodes der Messtaster 2 und 3 enthalten. Außerdem können in den Messtastern 2 bzw. 3 weitere Meldungscodes z.B. für eine Konfiguration oder für eine Fehlerdiagnose an den Messtastern 2, 3 bereitgestellt sein.

Alle Meldungscodes weisen die gleiche Anzahl von Binärzeichen auf. Durch die einheitliche Zeichenzahl der Meldungscodes sind diese mit einer für alle Meldungscodes gleichen Sendedauer übertragbar, insbesondere wenn alle Messtaster zumindest annähernd eine gleiche Übertragungsrate aufweisen. Dadurch lässt sich eine zuverlässige Meldungsübertragung vergleichsweise einfacher realisieren.

Alle Meldungscodes des Messtasters 2 können ein gemeinsames Muster, insbesondere Bitmuster aufweisen, das die Meldungscodes des Messtasters 2 von Meldungscodes des Messtasters 3 unterscheidet.Beispielsweise kann eine vorgegebene Anzahl führender Stellen der Meldungscodes des Messtasters 2 für eine entsprechende Markierung der Meldungscodes vorgesehen sein. Die Meldungscodes des Messtasters 3 sind in entsprechend abgewandelter Weise wie die Codes des Messtasters 2 vorgegeben, um eine vergleichsweise einheitliche und somit einfache Verarbeitung durch die Erfassungseinrichtung 4 zu ermöglichen.

Um eine Erkennung überlappender Sendevorgänge zu erleichtern, können die Meldungscodes derart gewählt sein, dass keiner der Codes zwei nebeneinander liegende 1-Werte aufweist. Dadurch sind jene überlappenden Sendevorgänge erkennbar, die zeitlich derart zueinander versetzt sind, dass aufgrund des überlappenden Sendens von mindestens zwei verschiedenen Messtastern wenigstens einmal das Zeichenmuster "11" in einer empfangenen Zeichenfolge entsteht. Die Erfassungseinrichtung 4 kann dadurch vorteilhaft einfach mit einer relativ schnellen Prüffunktion zur Erkennung eines Teils von überlappenden Sendevorgängen ausgestattet sein. Denn eine entsprechende Prüffunktion kann dazu ausgebildet sein, in einer empfangenen binären Zeichenfolge das Zeichenmuster "11" aufzufinden.

Die Erfassungseinrichtung 4 ist dazu ausgebildet, aus einer empfangenen Signalfolge von Lichtsignalen, die von einem Messtaster ausgesandt sind, eine binäre Zeichenfolge zu bilden und die Zeichenfolge mit jedem Meldungscode der Tabelle zu vergleichen. Die Meldungscodes können in einem Festwertspeicher, z.B. einem ROM-Baustein, der Erfassungseinrichtung 4 festgehalten sein.

Für einen Vergleich von empfangenen binären Zeichenfolgen mit den Meldungscodes der Tabelle kann die Erfassungseinrichtung 4 beispielsweise ein Schieberegister (nicht gezeigt) und ein Vergleichsregister (nicht gezeigt) aufweisen. Dabei können die einzelnen Speicherzellen des Vergleichsregisters und des Schieberegisters paarweise durch eine logische Operation der Erfassungseinrichtung 4 verknüpft sein, um deren Inhalt auf Übereinstimmung zu prüfen. Vorzugsweise ist das Schieberegister zur Aufnahme der empfangenen Zeichenfolge und das Vergleichsregister zur Aufnahme eines der Meldungscodes aus der Tabelle vorgesehen. Nach einer Verschiebung der empfangenen Zeichenfolge im Schieberegister um eine Stelle, d.h. um eine Speicherzelle, kann der nächste Teilabschnitt der empfangenen Zeichenfolge mit dem in das Vergleichsregister geladenen Meldungscode verglichen werden. Damit lassen sich verschiedene Teilabschnitte einer empfangenen Zeichenfolge nach einem der Meldungscodes absuchen.

Die Figur 3 zeigt ein Ablaufdiagramm für ein Beispiel eines Messvorgangs, bei dem von einem der Messtaster 2 oder 3 mehrere verschiedene Meldungen 6, 12 und 17 an die Erfassungseinrichtung gesendet werden. Die Darstellung der Meldungen 6, 12, 17 in Figur 3 kann eine Größe oder Zeitdauer der Meldungen bzw. der Übertragungszeit wiedergeben, allerdings können die Übertragungsdauern der Meldungen 6, 12, 17 auch kürzer, insbesondere um Größenordnungen - wie z.B. ein oder mehrere Zehnerpotenzen - kürzer sein als Zeitabschnitte, die zwischen z.B. Zeitpunkten 5, 8, 10, 14 und 16 liegen. Zur Vereinfachung bezieht sich das Beispiel auf einen Einsatz der erfindungsgemäßen Messvorrichtung 1 mit lediglich einem der beiden Messtaster 2 und 3, z.B. dem Messtaster 3, im Einzelbetrieb. Bei einem Einzelbetrieb, bei dem nur ein einziger der Messtaster 2 und 3 eingesetzt ist, kann jede Meldung zur Übertragung einmalig gesendet werden.

Die obere durchgehende horizontale Achse ist als Zeitachse t gedacht. Die untere, abschnittsweise unterbrochene Achse repräsentiert einen Weg x, den der Messtaster zurücklegt.

An einem ersten Zeitpunkt 5 sendet der Messtaster 3 (Messtaster B in Fig. 2) eine erste Meldung 6, die beispielsweise die Meldung "Ready" (bereit) mit dem digitalen Meldungscode "Ready" sein kann. Dabei bewegt sich der Messtaster auf einem Anfahrweg 7 auf einen Messpunkt zu. Zu einem Zeitpunkt 8 erreicht der Messtaster 3 eine Messpunktumgebung, der die Bewegung der Messtasters 3 auf einem Antastweg 9 im Vergleich zur Bewegung vor dem Zeitpunkt 8 verlangsamt ist. An einem Zeitpunkt 10 gelangt der Messtaster 3 mit einem Messpunkt 11 in Berührung. Dadurch wird das Aussenden einer Meldung 12 ausgelöst, die als Meldung "Probe" in der Tabelle der Fig. 2 bezeichnet ist. Für einen Einzelbetrieb des Messtasters 3 kann die Meldung "Probe" einmalig mit dem digitalen Meldungscode "Probe" gesendet werden. Die Meldung 12 wird an der Erfassungseinrichtung 4 empfangen und ausgewertet. Die Erfassungseinrichtung 4 kann das mit der Meldung 12 verbundene Messereignis an z.B. eine Werkzeugmaschine (nicht gezeigt) weiterleiten, die die Bewegung des Messtasters 3 am Messpunkt 11 stoppt, so dass die Wegachse x ab dieser Stelle unterbrochen ist. Nach Ablauf einer vorgegebenen Rastzeit 13, in der z.B. die Meldung 12 an die Erfassungseinrichtung 4 übermittelt werden kann, wird der Messtaster 3 ab einem Zeitpunkt 14 vom Messpunkt 11 wegbewegt. Im Messtaster 3 kann eine Nachprellzeit 15 vorgegeben sein, die z.B. durch eine Rückstellung eines Taststifts 3b nach Verlassen z.B. des Messpunkts 11 auslösbar ist. Der Messtaster kann derart ausgebildet sein, dass während der Nachprellzeit 15 Übertragungsvorgänge für Meldungen, insbesondere für Meldungen zu Messereignissen wie z.B. die Meldung "Probe" blockiert sind, um vorteilhaft unerwünschte Messereignisse auszuschließen. Die Nachprellzeit 15 kann dazu vorgesehen sein, dass beispielsweise im Messtasters 3 eine interne Prüfprozedur für eine Kalibrierung ungestört ausführbar ist. Im Zuge des Messvorgangs kann eine Prüfung der Kalibrierung gegebenenfalls dadurch unterstützt werden, dass der Messtaster 3 in einer vom Messpunkt entfernten Position für eine vorgegebene Zeit in Ruhe gehalten wird.

Nach Ablauf der Nachprellzeit 15 sendet der Messtaster 3 eine weitere Meldung 17. Dabei kann die Meldung "Ready" mit dem digitalen Meldungscode "Ready" als Meldung 17 versandt werden, um zu signalisieren, dass der Messtaster 3 zur Bewegung auf einem Anfahrweg 18 und zur Vermessung des nächsten Messpunktes bereit ist. Um anzuzeigen, dass vergleichsweise bald eine Erneuerung einer Energiequelle (nicht gezeigt) des Messtasters 3 erforderlich ist, kann der Messtaster 3 als Meldung 17 die Meldung "Ready + LB" mit dem digitalen Meldungscode "Ready + LB" an die Erfassungseinrichtung 4 senden.

Die Figur 4 zeigt ein Beispiel eines zeitlichen Ablaufs eines Messvorgangs mit der erfindungsgemäßen Messvorrichtung 1, bei dem beide Messtaster 2 und 3 gleichzeitig eingesetzt sind, um z.B. an zwei Werkstücken (nicht gezeigt) jeweils einen Messpunkt (nicht gezeigt) zu vermessen. Eine obere Zeitachse A ist dem Messtaster 2 und eine untere Zeitachse B ist dem Messtaster 3 zugeordnet. Die Proportionen verschiedener Zeitabschnitte, die an beiden Zeitachsen A und B gezeigt sind, sind in horizontaler Richtung maßstäblich gezeichnet. Einer vertikalen Richtung ist in Figur 4 keine Bedeutung zugewiesen.

Vor einem Zeitpunkt 20 wird am Messtaster 2 ein Messereignis durch Auslenkung des Taststifts 2b ausgelöst. Dabei wird im Messtaster 2 ein Übertragungsvorgang ausgelöst, um mit der Meldung "Probe" das Messereignis an die Erfassungseinrichtung 4 zu übermitteln. Eine Kontrolleinheit des Messtasters 2 ist in der gezeigten Situation auf einen Messbetrieb mit beiden Messtastern 2 und 3 eingestellt. Dabei ist eine Übertragung der Meldung "Probe" mit zwei Sendevorgängen 32 und 33 vorgesehen, um ein Messereignis durch Wiederholung der Meldung "Probe" an der Erfassungseinrichtung 4 zu signalisieren.

Zum Zeitpunkt 20 beginnt der Messtaster 2 mit dem ersten Sendevorgang 32. Hierbei sendet der Messtaster 2 den ersten digitalen Meldungscode "Probe 1st (A1)" für die Meldung "Probe" an die Erfassungseinrichtung 4. Im Übertragungsvorgang für die Meldung "Probe" ist nach dem ersten Sendevorgang 32 eine Wartezeit 30 festgelegt, nach der der zweite Sendevorgang 33, der zum Senden des zweiten digitalen Meldungscodes "Probe 2nd(A2)" für die Meldung "Probe" vorgesehen ist, von der Kontrolleinheit des Messtasters 2 freigegeben ist. Zum Zeitpunkt 24 kann nicht nur der zweite Sendevorgang 33 sondern auch der gesamte Übertragungsvorgang der Meldung "Probe" abgeschlossen sein. Der Übertragungsvorgang der Meldung "Probe" zur Signalisierung eines Messereignisses an der Erfassungseinrichtung 4 dauert dabei eine Übertragungszeit 27. Der Übertragungsvorgang kann des Weiteren über den Zeitpunkt 24 hinaus auch noch eine Nachprellzeit 15 umfassen.

Vor einem Zeitpunkt 21 tritt am Messtaster 3, dessen Kontrolleinheit ebenfalls auf einen Messbetrieb mit beiden Messtastern 2 und 3 eingestellt ist, ein weiteres Messereignis auf. Daher setzt eine Kontrolleinheit des Messtasters 3 einen entsprechenden Übertragungsvorgang zur Signalisierung des Messereignisses an der Erfassungseinrichtung 4 in Gang. In der Kontrolleinheit des Messtasters 3 ist eine Sendefolge für die Meldung "Probe" mit zwei Sendevorgängen 34 und 35 festgelegt, durch die der zweite Sendevorgang 35 nach einer Wartezeit 31 auf den ersten Sendevorgang 34 folgt. Dabei sendet der Messtaster 3 mit dem Sendevorgang 34 den digitalen Meldungscode "Probe 1st (B1)" und mit dem Sendevorgang 35 den Meldungscode "Probe 2nd(B2)" an die Erfassungeinrichtung 4. Durch die unterschiedlichen Meldungscodes sind die zwei Sendevorgänge 34 und 35 - ebenso wie die beiden Sendevorgänge 32 und 33 - beim Empfang durch die Erfassungseinrichtung vorteilhaft voneinander unterscheidbar und ermöglichen eine relativ genaue Bestimmung der tatsächlichen Lage eines Messpunkts.

Damit die Erfassungseinrichtung 4 immer erkennen kann, dass ein Messpunkt von einem der Messtaster 2, 3 erreicht worden ist, können die Messtaster 2, 3 nach einem Senden der Meldungscodes "Probe 2nd(A2)" bzw. "Probe 2nd(B2)" ihre jeweiligen Meldungscodes "Probe" senden. Dadurch ist durch die Erfassungseinrichtung erkennbar, dass ein Messpunkt vom jeweiligen Messtaster zwar erreicht worden ist, aber dass durch Störung beider ersten Meldungscodes "Probe 1st" und "Probe 2nd" kein Messzeitpunkt, insbesondere für eine Positionsberechnung, mehr durch die Erfassungseinrichtung 4 bestimmbar ist.

Bei einem Sendevorgang 32, 33, 34, 35 entsteht aus einer binären Zeichenfolge eine Signalfolge, zu deren Empfang die Erfassungseinrichtung 4 mit einer Empfangseinheit ausgestattet ist, die aus der Signalfolge eine binäre Zeichenfolge bildet. Die Erfassungseinrichtung 4 weist eine Auswertungseinheit auf, die die binäre Zeichenfolge darauf prüft, ob sie mit einem der Meldungscodes übereinstimmt.

Die Sendevorgänge 32 und 34 können sich im Zeitpunkt 21 überlappen, wenn der Sendevorgang 32 des Messtasters 2 bis zum Zeitpunkt 21 nicht beendet ist. Durch die voneinander verschiedenen Meldungscodes der Messtaster 2 und 3 nach Fig. 2 entsteht bei einer zeitlichen Überlappung von Sendevorgängen eine Signalfolge, aus der die Erfassungseinrichtung 4 beim Empfang eine binäre Zeichenfolge erzeugt, die mit keinem der Meldungscodes übereinstimmt. Wenn alle Meldungscodes die gleiche Zeichenzahl und auch die gleiche Anzahl von 1-Werten aufweisen, ist für die Erfassungseinrichtung 4 z.B. an einer Länge und z.B. an einer Anzahl von 1-Werten einer empfangenen Zeichenfolge eine Überlappung von Sendevorgängen erkennbar. Die Erfassungseinrichtung 4 ist vorzugsweise dazu ausgebildet, eine empfangene Zeichenfolge zu verwerfen, wenn sie nicht mit einem der Meldungscodes übereinstimmt. Dadurch kann die Erfassungseinrichtung relativ schnell zum Empfang und zur Auswertung einer nachfolgenden Signalfolge bereit sein.

Um zu gewährleisten, dass von jedem Messtaster 2 und 3 immer mindestens ein Sendevorgang 32 oder 33 und 34 oder 35 ungestört empfangen werden kann, sind die Wartezeiten 30 und 31 in den Sendefolgen von Übertragungsvorgängen für Messereignisse der beiden Messtaster 2 und 3 aufeinander abgestimmt. Beide Wartezeiten 30 und 31 sind derart festgelegt, dass jede der Wartezeiten 30, 31 größer als jede Sendedauer eines der Sendevorgänge 32, 33, 34 und 35 ist. Hierdurch ist gewährleistet, dass keiner der Sendevorgänge 32, 33, 34 und 35 in einer der Sendefolgen des einen der Messtaster 2, 3 beide Sendevorgänge 32, 33 bzw. 34, 35 des anderen der Messtaster 2, 3 stören kann. Sofern die Sendevorgänge 32, 33, 34, 35 unterschiedliche Sendedauern aufweisen, ist eine minimale Wartezeit zwischen zwei Sendevorgängen vorzugsweise größer als die längste Sendedauer von den Sendevorgängen 32, 33, 34, 35.

Des Weiteren sind die Wartezeiten 30 und 31 derart gewählt, bei jedem zeitlichen Versatz der ersten Sendevorgänge 32 und 34, durch den eine Sendefolge eines der Messtaster 2, 3 innerhalb einer Sendefolge des anderen der Messtaster 2, 3 gelegen ist, immer nur ein Sendevorgang 32, 33, 34, 35 in jeder Sendefolge gestört sein kann.

Dieses Kriterium ist in Figur 4 anhand der gestrichelten Linien 36 und 37 hervorgehoben, mit denen die Übertragungsdauer 27 von der Zeitachse A zwischen die Sendevorgänge 34 und 35 auf der Zeitachse B projiziert ist. Die Sendefolgen der Messtaster 2 und 3 können derart zeitlich zueinander versetzt sein, dass sich zum Zeitpunkt 22 ein Ende des Sendevorgangs 34 und ein Beginn des Sendevorgangs 32 gerade noch überlappen. Durch die Wartezeit 31 liegen jedoch die beiden Sendevorgänge 34 und 35 des Messtasters 3 so weit auseinander, dass beide Sendevorgänge 32 und 33 des Messtasters 2 bereits abgeschlossen sind, wenn der zum Zeitpunkt 26 der zweite Sendevorgang 35 des Messtasters 3 beginnt. Daher ist bei einem Versatz, an dem sich die ersten Sendevorgänge 32 und 34 überlappen, eine Überlappung der zweiten Sendevorgänge 33 und 35 ausgeschlossen. In entsprechend abgewandelter Weise trifft dies auch bei einem zeitlichen Versatz der Sendefolgen der beiden Messtaster 2 und 3 zu, bei dem sich z.B. die zweiten Sendevorgänge 33 und 35 zum Zeitpunkt 26 überlappen. Somit können die Sendefolgen der beiden Messtaster 2 und 3 als inkommensurabel bezeichnet werden, weil die Wartezeiten 30 und 31 derart gewählt sind, dass bei jeder zeitlichen Überlappung von je einem Sendevorgang einer Sendefolge jedes der Messtaster 2, 3 ausgeschlossen ist, dass weitere Sendevorgänge derselben Sendefolgen der beiden Messtaster sich überlappen können.

Die Erfassungseinrichtung 4 ist derart ausgebildet, dass beim ungestörten Empfang eines der Meldungscodes für ein Messereignis von einem der Messtaster 2 und 3 eine Zeitmarke abgespeichert wird. Dadurch lassen sich die Messtaster 2 und 3 vorteilhaft von einer solchen Zeiterfassung und einer Übertragung entsprechender Zeitdaten entlasten. Wenn die Erfassungseinrichtung 4 von einem der Messtaster 2, 3 einen Meldungscode "Probe" empfängt, ist der Erfassungseinrichtung 4 signalisiert, dass für einen am Messtaster 2, 3 anliegenden Messpunkt die Meldungscodes zu Erfassung von Zeitmarken von z.B. äußeren Lichtquellen gestört worden sind. Die Erfassungseinrichtung 4 kann zur Übermittlung eines Freigabesignals z.B. an eine Werkzeugmaschine (nicht gezeigt) ausgebildet sein, um eine Fortsetzung eines Messvorgangs mit mehreren Messpunkten zu ermöglichen.

Vorzugsweise sind in der Erfassungseinrichtung 4 zumindest für jeden der Meldungscodes der Tabelle(Fig.2) der Meldung "Probe" Verzögerungszeiten hinterlegt. Des Weiteren kann die Erfassungseinrichtung 4 derart ausgebildet sein, dass die Erfassungseinrichtung 4 beim Empfang eines der Meldungscodes für ein Messereignis - hier für jeden Meldungscode für die Meldung "Probe" - einen Eintrittszeitpunkt für ein entsprechendes Messereignis berechnet. Dadurch kann die erfindungsgemäße Messvorrichtung mit einem Stoppsignal für einen Achsantrieb, der einen der Messtaster 2 bzw. 3 bewegt, zusätzlich eine Information übermitteln, mit der sich aus z.B. einer Bewegungsgeschwindigkeit und einer Stopp-Position des jeweiligen Messtasters 2, 3 eine Position des Messpunkts berechnen lässt. Gegebenenfalls kann die Erfassungseinrichtung 4 für eine Berechnung einer Position eines Messpunkts ausgebildet sein.

### Bezugszeichenliste:

- 1: Messvorrichtung
- 2: Messtaster
- 2a: Gehäuse
- 2b: Taststift
- 2c: Tastkörper
- 2d: Fensterbereich
- 2e: Sendeelement
- 2f: Aufnahmekonus
- 3: Messtaster
- 3b: Taststift
- 4: Erfassungseinrichtung
- 4a: Gehäuse
- 4b: Fenster
- 4c: Empfangselement
- 4d: Sendeelement
- 4e: Anschlussleitung
- 5: Zeitpunkt
- 6: Meldung
- 7: Anfahrweg
- 8: Zeitpunkt
- 9: Antastweg
- 10: Zeitpunkt
- 11: Messpunkt
- 12: Meldung
- 13: Rastzeit
- 14: Zeitpunkt
- 15: Nachprellzeit
- 16: Zeitpunkt
- 17: Meldung
- 18: Anfahrweg
- 20: Zeitpunkt
- 21: Zeitpunkt
- 22: Zeitpunkt
- 23: Zeitpunkt
- 24: Zeitpunkt
- 25: Zeitpunkt
- 26: Zeitpunkt
- 27: Übertragungsdauer
- 30: Wartezeit
- 31: Wartezeit
- 32: Sendevorgang
- 33: Sendevorgang
- 34: Sendevorgang
- 35: Sendevorgang
- 36: Linie
- 37: Linie

## Patentansprüche

1. Messvorrichtung (1) für eine Werkzeugmaschine, wobei die Messvorrichtung (1) eine Erfassungseinrichtung (4) und mindestens zwei Messtaster (2, 3) umfasst, und wobei die Erfassungseinrichtung (4) und die Messtaster (2, 3) für eine kabellose, digitale Übertragung von Meldungen (6, 12, 17) von jedem der Messtaster (2, 3) an die Erfassungseinrichtung (4) ausgebildet sind,
wobei jeder der Messtaster (2, 3) eine Kontrolleinheit umfasst, die zur Steuerung zeitlicher Abläufe zur Übertragung von Meldungen (6, 12, 17) ausgebildet ist, des Weiteren in jedem der Messtaster (2, 3) für mindestens eine Meldung (6, 12, 17) ein Übertragungsvorgang mit einer Sendefolge festgelegt ist, die mehrere Sendevorgänge (32, 33, 34, 35) für ein mehrmaliges Senden der Meldung (6, 12, 17) umfasst,
wobei zwischen jeweils zwei der Sendevorgänge (32, 33, 34, 35) einer Sendefolge eine Wartezeit (30, 31) vorgegeben ist,
in der der jeweilige Messtaster (2, 3) nicht sendet und
die größer ist als eine Sendedauer eines Sendevorgangs (32, 33, 34, 35) eines der Messtaster (2, 3) bei einer Übertragung einer Meldung (6, 12, 17),
**dadurch gekennzeichnet, dass** die Wartezeit in jedem Messtaster (2, 3) von den Wartezeiten der verbleibenden Messtaster (2, 3) verschieden ist.

2. Messvorrichtung (1) nach Anspruch 1, **dadurch gekennzeichnet, dass** die Meldung (6, 12, 17) im jeweiligen Messtaster (2, 3) in Form eines vorgegebenen Meldungscodes bereitgestellt, z.B. abgespeichert, ist.

3. Messvorrichtung (1) nach Anspruch 2, **dadurch gekennzeichnet, dass** der Meldung (6, 12, 17) im jeweiligen Messtaster (2, 3) mehrere verschiedene Meldungscodes zugeordnet sind, die zur Übertragung der Meldung (6, 12, 17) vorgesehen sind.

4. Messvorrichtung (1) nach einem der vorgenannten Ansprüche, **dadurch gekennzeichnet, dass** jeder in einem der Messtaster (2, 3) abgespeicherte Meldungscode eindeutig einer Meldung (6, 12, 17) zugewiesen ist.

5. Messvorrichtung (1) nach einem vorgenannten Ansprüche, **dadurch gekennzeichnet, dass** jeder in einem Messtaster (2, 3) abgespeicherte Meldungscode eindeutig nur einem der Messtaster zugewiesen ist.

6. Messvorrichtung (1) nach einem der vorgenannten Ansprüche, dass alle in den Messtastern (2, 3) gespeicherten Meldungscodes derart aufeinander abgestimmt sind, dass eine zeitliche Überlappung von mehreren Sendevorgängen erkennbar ist.

7. Messvorrichtung (1) nach einem der vorgenannten Ansprüche, **dadurch gekennzeichnet, dass** die Erfassungseinrichtung (4) eine Auswertungseinheit umfasst, die zur Zuordnung eines empfangenen Meldungscodes zu einer Meldung (6, 12, 17) und einem Messtaster (2, 3) ausgebildet ist.

8. Messvorrichtung (1) nach einem der vorgenannten Ansprüche, **dadurch gekennzeichnet, dass** eine Anzahl von Sendevorgängen (32, 33, 34, 35) der Sendefolge auf die Anzahl der Messtaster (2, 3) abgestimmt ist.

9. Messvorrichtung (1) nach einem der vorgenannten Ansprüche, **dadurch gekennzeichnet, dass** die Sendefolge mehrere verschiedene Wartezeiten (30, 31) aufweist, wenn die Sendefolge mehr als zwei Sendevorgänge (32, 33, 34, 35) umfasst.

10. Messvorrichtung (1) nach einem der vorgenannten Ansprüche, **dadurch gekennzeichnet, dass** die Wartezeit (30, 31) der Sendefolge auf die Anzahl der Messtaster (2, 3) abgestimmt ist.

11. Messvorrichtung (1) nach einem der vorgenannten Ansprüche, **dadurch gekennzeichnet, dass** in mindestens einem der Messtaster (2, 3) eine Nachprellzeit vorgegeben ist, in der ein Beginn eines weiteren Übertragungsvorgangs für die Meldungen (6, 12, 17) blockiert ist.

12. Messvorrichtung (1) nach einem der vorgenannten Ansprüche, **dadurch gekennzeichnet, dass** in jedem der Messtaster (2, 3) eine maximale Sendedauer für Sendevorgänge (32, 33, 34, 35) vorgegeben ist.

13. Messvorrichtung (1) nach einem der vorgenannten Ansprüche, **dadurch gekennzeichnet, dass** die Messvorrichtung (1) für eine kabellose Übertragung mit Infrarotlicht ausgebildet ist.

14. Messvorrichtung (1) nach einem der vorgenannten Ansprüche, **dadurch gekennzeichnet, dass** die Messtaster (2, 3) und die Erfassungseinrichtung (4) für eine asynchrone Übertragung ausgebildet sind.

## Claims

1. Measuring device (1) for a machine tool, wherein the measuring device (1) comprises a detection device (4) and at least two measuring sensors (2, 3), and wherein the detection device (4) and the measuring sensor (2, 3) are configured for a wireless, digital transmission of messages (6, 12, 17) from each of the measuring sensors (2, 3) to the detection device (4),
wherein each of the measuring sensors (2, 3) comprises a control unit, which is designed for controlling time sequences for the transmission of messages (6, 12, 17),
furthermore in each of the measuring sensors (2, 3) for at least one message (6, 12, 17) a transmission operation is defined with a transmission sequence, which comprises a plurality of transmission processes (32, 33, 34, 35) for a repeated transmission of the message (6, 12, 17),
wherein between two of the transmission processes (32, 33, 34, 35) of a transmission sequence respectively a waiting period (30, 31) is defined, in which the respective measuring sensor (2, 3) does not transmit and which is longer than a transmission period of a transmission process (32, 33, 34, 35) of one of the measuring sensors (2, 3) during the transmission of a message (6, 12, 17), **characterised in that** the waiting time in each measuring sensor (2, 3) is different from the waiting times of the remaining measuring sensors (2, 3).

2. Measuring device (1) according to claim 1, **characterised in that** the message (6, 12, 17) is provided, e.g. saved, in the respective measuring sensor (2, 3) in the form of a predefined message code.

3. Measuring device (1) according to claim 2, **characterised in that** a plurality of different message codes are assigned to the message (6, 12, 17) in the respective measuring sensor (2, 3), which message codes are provided for transmitting the message (6, 12, 17).

4. Measuring device (1) according to any one of the preceding claims, **characterised in that** each message code saved in one of the measuring sensors (2, 3) is assigned clearly to a message (6, 12, 17).

5. Measuring device (1) according to one of the preceding claims, **characterised in that** each message code saved in a measuring sensor (2, 3) is assigned clearly to only one of the measuring sensors.

6. Measuring device (1) according to any one of the preceding claims, **characterised in that** all of the message codes saved in the measuring sensors (2, 3) are coordinated with one another such that a time overlap of a plurality of transmission processes can be identified.

7. Measuring device (1) according to any one of the preceding claims, **characterised in that** the detection device (4) comprises an evaluation unit which is configured to assign a received message code to a message (6, 12, 17) and a measuring sensor (2, 3).

8. Measuring device (1) according to any one of the preceding claims, **characterised in that** a number of transmission processes (32, 33, 34, 35) of the transmission sequence is adjusted to the number of measuring sensors (2, 3).

9. Measuring device (1) according to any one of the preceding claims, **characterised in that** the transmission sequence includes a plurality of different waiting periods (30, 31), if the transmission sequence comprises more than two transmission processes (32, 33, 34, 35).

10. Measuring device (1) according to any one of the preceding claims, **characterised in that** the waiting period (30, 31) of the transmission sequence is adjusted to the number of measuring sensors (2, 3).

11. Measuring device (1) according to any one of the preceding claims, **characterised in that** in at least one of the measuring sensors (2, 3) a readjusting period is defined, in which a further transmission operation for the messages (6, 12, 17) is prevented from being started.

12. Measuring device (1) according to any one of the preceding claims, **characterised in that** in each of the measuring sensors (2, 3) a maximum transmission period is defined for transmission processes (32, 33, 34, 35).

13. Measuring device (1) according to any one of the preceding claims, **characterised in that** the measuring device (1) is configured for wireless transmission with infrared light.

14. Measuring device (1) according to any one of the preceding claims, **characterised in that** the measuring sensor (2, 3) and the detection device (4) are configured for asynchronous transmission.

## Revendications

1. Dispositif de mesure (1) pour une machine-outil, le dispositif de mesure (1) comprenant un dispositif d'acquisition (4) et au moins deux palpeurs de mesure (2, 3) et le dispositif d'acquisition (4) et les palpeurs de mesure (2, 3) étant conçus pour une transmission numérique sans fil de messages (6, 12, 17) adressés par chaque palpeur de mesure (2, 3) au dispositif d'acquisition (4), chaque palpeur de mesure (2, 3) comprenant une unité de contrôle conçue pour commander le déroulement dans le temps de la transmission de messages (6, 12, 17), une procédure de transmission avec une séquence d'émissions étant définie dans chacun des palpeurs de mesure (2, 3) pour au moins un message (6, 12, 17), laquelle comprend plusieurs procédures d'émission (32, 33, 34, 35) pour un envoi réitéré du message (6, 12, 17), un temps d'attente (30, 31) étant prévu entre deux des procédures d'émission (32, 33, 34, 35) d'une séquence d'émission durant lequel le palpeur de mesure correspondant (2, 3) n'émet pas et qui est plus long que la durée d'émission d'une procédure d'émission (32, 33, 34, 35) d'un des palpeurs de mesure (2, 3) lors d'une transmission d'un message (6, 12, 17), **caractérisé en ce que** le temps d'attente dans chaque palpeur de mesure (2, 3) est différent des temps d'attente des autres palpeurs de mesure (2, 3).

2. Dispositif de mesure (1) selon la revendication 1, **caractérisé en ce que** le message (6, 12, 17) est mis à disposition dans le palpeur de mesure (2, 3) correspondant sous la forme d'un code de message prédéfini, par exemple mémorisé.

3. Dispositif de mesure (1) selon la revendication 2, **caractérisé en ce que** plusieurs codes de message différents prévus pour la transmission du message (6, 12, 17) sont attribués au message (6, 12, 17) dans le palpeur de mesure correspondant (2, 3).

4. Dispositif de mesure (1) selon l'une des revendications précédentes, **caractérisé en ce que** chaque code de message mémorisé dans l'un des palpeurs de mesure (2, 3) est assigné de façon univoque à un message (6, 12, 17).

5. Dispositif de mesure (1) selon l'une des revendications précédentes, **caractérisé en ce que** chaque code de message mémorisé dans un palpeur de mesure (2, 3) est assigné de façon univoque à un seul palpeur de mesure.

6. Dispositif de mesure (1) selon l'une des revendications précédentes, **caractérisé en ce que** tous les codes de message mémorisés dans les palpeurs de mesure (2, 3) sont coordonnés ensemble de telle sorte qu'une juxtaposition temporelle de plusieurs procédures d'émission peut être reconnue.

7. Dispositif de mesure (1) selon l'une des revendications précédentes, **caractérisé en ce que** le dispositif d'acquisition (4) comprend une unité d'exploitation conçue pour l'attribution d'un code de message reçu à un message (6, 12, 17) et à un palpeur de mesure (2, 3).

8. Dispositif de mesure (1) selon l'une des revendications précédentes, **caractérisé en ce que** le nombre de procédures d'émission (32, 33, 34, 35) des séquences d'émission est ajusté au nombre de palpeurs de mesure (2, 3).

9. Dispositif de mesure (1) selon l'une des revendications précédentes, **caractérisé en ce que** la séquence d'émission comprend plusieurs temps d'attente (30, 31) différents lorsque la séquence d'émission comprend plus de deux procédures d'émission (32, 33, 34, 35).

10. Dispositif de mesure (1) selon l'une des revendications précédentes, **caractérisé en ce que** le temps d'attente (30, 31) des séquences d'émission est ajusté au nombre de palpeurs de mesure (2, 3).

11. Dispositif de mesure (1) selon l'une des revendications précédentes, **caractérisé en ce qu'**un temps de rebondissement postérieur est prévu dans au moins un des palpeurs de mesure (2, 3) durant lequel le début d'une procédure de transmission pour les messages (6, 12, 17) est bloqué.

12. Dispositif de mesure (1) selon l'une des revendications précédentes, **caractérisé en ce qu'**une durée d'émission maximale pour les procédures d'émission (32, 33, 34, 35) est fixée dans chacun des palpeurs de mesure (2, 3).

13. Dispositif de mesure (1) selon l'une des revendications précédentes, **caractérisé en ce que** le dispositif de mesure (1) est conçu pour une transmission sans fil par lumière infrarouge.

14. Dispositif de mesure (1) selon l'une des revendications précédentes, **caractérisé en ce que** les palpeurs de mesure (2, 3) et le dispositif d'acquisition (4) sont conçus pour une transmission asynchrone.
